(19) **Europäisches Patentamt**

**European Patent Office**

**Office européen des brevets**

(11) Veröffentlichungsnummer: **0 220 699**
**B1**

(12) **EUROPÄISCHE PATENTSCHRIFT**

(45) Veröffentlichungstag der Patentschrift:
13.09.89

(51) Int. Cl.⁴: **A01K 39/00, B65G 11/20**

(21) Anmeldenummer: **86114832.8**

(22) Anmeldetag: **24.10.86**

(54) **Futterwagen für eine mehretagige Käfigbatterie.**

(30) Priorität: **26.10.85 DE 3538179**

(43) Veröffentlichungstag der Anmeldung:
**06.05.87 Patentblatt 87/19**

(45) Bekanntmachung des Hinweises auf die Patenterteilung:
**13.09.89 Patentblatt 89/37**

(84) Benannte Vertragsstaaten:
**AT BE DE FR GB GR NL**

(56) Entgegenhaltungen:
**DE-C- 1 022 967**
**DE-U- 7 413 448**

(73) Patentinhaber: **Firma Salmet GmbH & Co
Kommanditgesellschaft, Hilsbacher Strasse 40,
D-6921 Ittlingen(DE)**

(72) Erfinder: **Lackner, Karl Horst, Bauberg 21,
D-6921 Ittlingen(DE)**

(74) Vertreter: **Utermann, Gerd, Dipl.-Ing.,
Kilianstrasse 7 Kilianspassage Postfach 3525,
D-7100 Heilbronn(DE)**

## Beschreibung

Die Erfindung betrifft einen Futterwagen für eine mehretagige Käfigbatterie, mit einem Futterbehälter, einem Höhenförderer für das Futter, der den verschiedenen Käfigetagen zugeordnete Abgabeöffnungen aufweist, und mit verstellbaren Auslauftrichtern, die sich jeweils von einer Abgabeöffnung abwärts geneigt erstrecken und im Betrieb bis in den zugehörigen Etagentrog der Käfigbatterie herabragen.

Ein solcher Futterwagen ist bekannt (DE-U-74 13 448). Dieser bekannte Futterwagen ist für eine Käfigbatterie mit rückseitig aneinander anschließenden Doppelkäfigen vorgesehen, die auf den einander gegenüberliegenden Längsseiten mit waagerechten Trögen versehen sind. Der Futterwagen übergreift die Käfigbatterie, weist auf dessen sich gegenüberliegenden Längsseiten jeweils einen Futterbehälter mit einem Höhenförderer und mit Auslauftrichtern auf und ist auf zwei Laufschienen in Längsrichtung verfahrbar. Somit wird jeder Trog bei einem Durchlauf des Futterwagens vom einen zum anderen Ende der Käfigbatterie auf seiner ganzen Länge mit Futter beschickt.

Diese direkte Futterzuführung an alle Stellen des Troges begünstigt eine qualitativ gleichmäßige Fütterung aller Tiere, die dann nicht gewährleistet ist, wenn ein längsgerichteter Futtertransport durch den Trog stattfindet, weil dann bei einem Mischfutter bestimmte Futteranteile bevorzugt von den Tieren weggepickt werden, so daß das Futter an den in Transportrichtung nachfolgenden Stellen nicht mehr in der vorgesehenen Zusammensetzung ankommt. Außerdem hat ein sich durch den Trog erstreckendes Transportorgan wie eine Kette oder dergleichen den Nachteil, daß trotz mengenmäßig richtiger Fütterung Futterreste für längere Zeit im Trog verbleiben, was zu einer Qualitätsminderung des Futter führt.

Ein Nachteil der bekannten Futterzuführung mittels verfahrbarer Auslauftrichter liegt jedoch darin, daß es zu einer ungleichmäßigen Trogbefüllung bzw. zu Futterlücken im Trog kommt wenn sich das Futter auch nur kurzzeitig durch Brückenbildung oder dergleichen im Auslauftrichter staut. Dieser Gefahr wird beim bekannten Futterwagen dadurch begegnet, daß innerhalb eines jeden Auslauftrichters ein Drahtrahmen aufgehängt ist, der bis nahe zur Bodenöffnung des Auslauftrichters herabreicht und über einen aus dem Auslauftrichter nach außen geführten Doppelhebel und ein an diesen angreifendes Gestänge von einem Exzenter im wesentlichen vertikal hin und her bewegbar ist. Diese Rütteleinrichtung verhindert zwar Brückenbildungen im Auslauftrichter und sichert dadurch eine kontinuierliche Futterabgabe, erfordert aber einen entsprechenden Aufwand. Insbesondere sind auch die innerhalb der Auslauftrichter angeordneten Teile und Lager oder Gelenkstellen schlecht zugänglich, was angesichts der Rüttelbeanspruchung und des damit verbundenen Verschließes sowie im Hinblick auf die Anordnung im Futterstrom ungünstig ist.

Dementsprechend liegt der Erfindung die Aufgabe zugrunde, die kontinuierliche Futterabgabe durch die Auslauftrichter in einer Weise sicherzustellen, die weder einen größeren konstruktiven Aufwand erfordert noch verschleiß- und wartungsintensiv ist.

Diese Aufgabe wird erfindungsgemäß dadurch gelöst, daß wenigstens ein Teil der geneigten Wand eines jeden Auslauftrichters, auf der das Futter herabrutscht, offen gestaltet ist und in dieser Wandöffnung eine entsprechend geneigte, drehbar gelagerte und mit einer Antriebseinrichtung versehene Scheibe angeordnet ist, die in diesem Bereich die Wand der Auslauftrichters bildet.

Bei dieser Ausbildung befindet sich also kein Rütteteil innerhalb des Auslauftrichters. Dieser ist auch nicht als insgesamt starres, in Umfangsrichtung geschlossenes Bauteil ausgebildet sondern mit einer Wandöffnung versehen, die durch die geneigt angeordnete Scheibe abgeschlossen ist. Diese Scheibe rotiert während des Betriebs in der Scheibenebene, so daß der Auslauftrichter stets geschlossen bleibt, jedoch eine Relativbewegung zwischen der von der Scheibe gebildeten Wandfläche und der restlichen Trichterwand und damit auch gegenüber dem im Trichter befindlichen Futter stattfindet. Bereits eine vergleichsweise langsame Rotation der Scheibe verhindert ein Festsetzen von Futter im Auslauftrichter. Dementsprechend entfällt ein verschleißintensiver Rüttelvorgang mit einem Exzenterantrieb oder dergleichen. Da die Scheibe naturgemäß an ihrer dem Innenraum des Trichters abgewandten Außenseite angetrieben wird, kann das Futter den Trichter glatt durchlaufen, ohne auf Teile innerhalb des Trichters aufzutreffen, an denen es sich auch festsetzen könnte. Ebenso kann die Antriebseinrichtung für die Scheibe gut zugänglich angebracht werden.

Ähnliches wird auch nicht durch einen Förderer nach DE-C 1 022 967 erreicht, der eine nach oben offene, im wesentlichen horizontale Förderrinne hat, in der im Abstand vom Boden Scheiben rotieren, die das Fördergut, insbesondere Kohle, Bergegut oder dgl. transportieren und durch seitlich nach außen gerichtete Abstreifbleche seitlich aus der Rinne herausbewegen lassen. Die dabei vorgesehenen Scheiben bilden nicht einen Teil der Wand, sondern die befinden sich im Abstand über dem Boden und schützen diesen gegen Verschleiß.

Zweckmäßigerweise erstrecken sich die Scheiben im wesentlichen über die gesamte Länge des zugehörigen Auslauftrichters, so daß der gewünschte Effekt der rotierenden Scheibe in jedem Querschnitt des Trichterkanals wirksam ist. Dabei können nen die Scheiben nach beiden Seiten über den zugehörigen Auslauftrichter vorstehen. Auf diese Weise läßt sich eine vergleichsweise große Wandöffnung im Auslauftrichter abschließen, die über ihre ganze Länge eine einheitliche Breite aufweisen kann.

Bei einer vorteilhaften Ausführungsform verläuft die Drehachse jeder Scheibe seitlich vom zugehörigen Auslauftrichter. In diesem Falle liegt der Drehpunkt bzw. Mittelpunkt der Scheibe außerhalb des Bereichs der Trichterwandöffnung, so daß sich alle im Bereich der Wandöffnung befindlichen Scheibenpunkt in gleichem Drehsinn bewegen. Außerdem ist die Bewegungsgeschwindigkeit der betreffenden Scheibenpunkte von ihrem Abstand zur Scheibenachse abhängig. Daher kann infolge der seitlichen Versetzung der Drehachse zum Auslauftrichter mit geringer Drehgeschwindigkeit der Scheiben gearbeitet werden.

Zweckmäßigerweise können die Antriebseinrichtungen der Scheiben vom Fahrantrieb des Futterwagens abgeleitet sein. Auf die Wirkung der Scheiben bzw. den kontinuierlichen Futterstrom durch die Auslauftrichter kommt es ja nur während des Verfahrens des Futterwagens an. Dementsprechend kann der Aufwand für selbständige Antriebseinrichtungen und deren Betätigung entfallen.

Ein Ausführungsbeispiel der Erfindung wird nachfolgend anhand einer schematischen Zeichnung näher erläutert. Es zeigen:

Fig. 1 einen vertikalen Querschnitt durch eine Käfigbatterie mit dem Futterwagen;

Fig. 2 einen vertikalen Längsschnitt entsprechend Linie II-II in Fig. 1; und

Fig. 3 eine vergrößerte perspektivische Teildarstellung eines Auslauftrichters mit Scheibe und Trog.

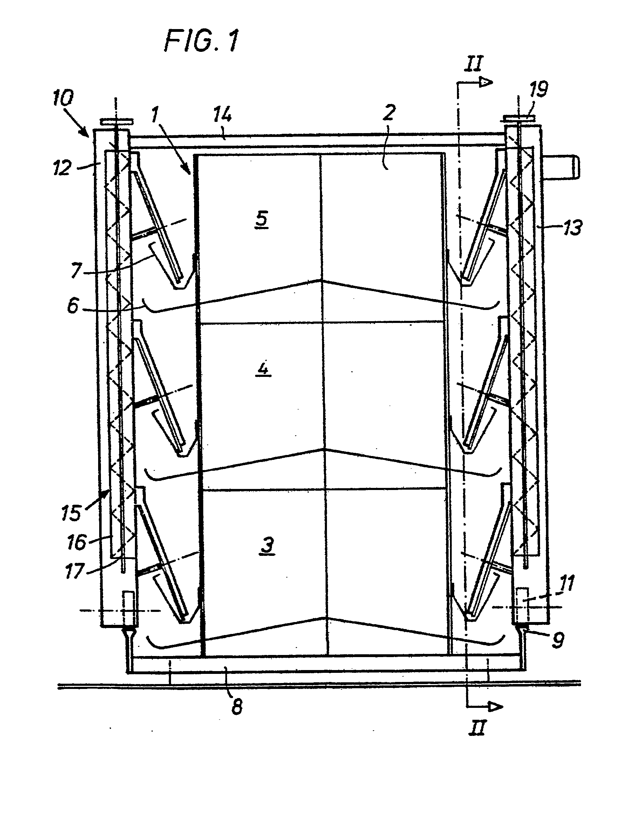

Gemäß Fig. 1 ist eine Käfigbatterie 1 mit Käfigen 2 vorgesehen, die in Doppelreihen in einer unteren Käfigetage 3, einer mittleren Käfigetage 4 und einer oberen Käfigetage 5 angeordnet sind.

Die Käfige 2 sind paarweise mit gemeinsamer Rückseite zusammengebaut, so daß die zugänglichen Vorderseiten der Käfige 2 die Längsseiten der Batterie 1 bilden. Jede Käfigetage 3 bis 5 ist auf gegenüberliegenden Seiten mit einem Eisammelrost 6 und mit einem Etagentrog 7 versehen, die sich in waagerechter Richtung über die ganze Länge der Batterie 1 erstrecken.

Die gesamte Käfigbatterie 1 ist auf Querschienen 8 abgestützt, an denen auf jeder Längsseite eine längsgerichtete Laufschiene 9 angebracht ist.

Auf den beiden Laufschienen 9 ist ein Futterwagen 10 mit vier Rädern 11 verfahrbar. Der Futterwagen 10 besteht im wesentlichen aus zwei schmalen hoch aufragenden Seitenteilen 12 und 13, die oberhalb der Käfigbatterie 1 durch Querstangen 14 zu einer starren Konstruktion miteinander verbunden sind. Dadurch erhält der Futterwagen 10 eine in der Längsrichtung bzw. Fahrtrichtung gesehen etwa umgekehrt u-förmige Gestalt und übergreift die Käfigbatterie von oben an beiden Längsseiten.

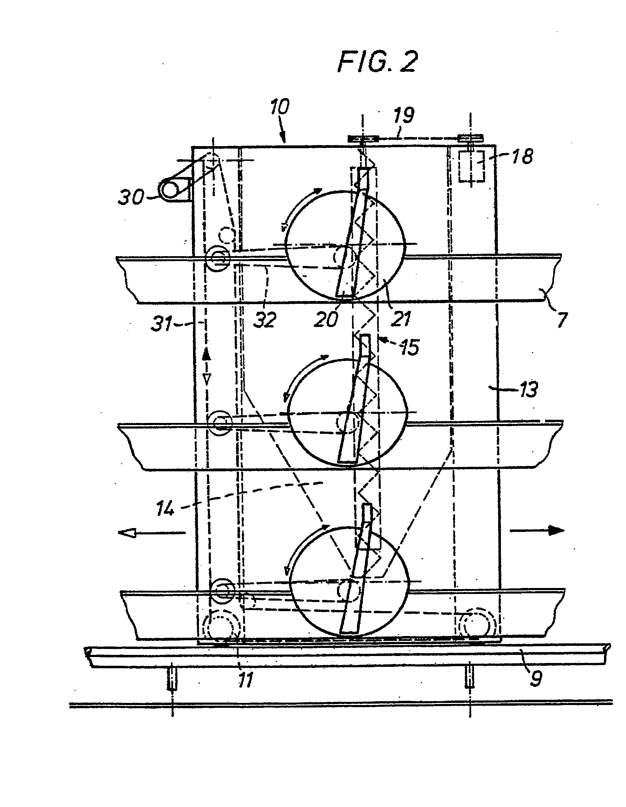

Jedes Seitenteil 12 und 13 bildet einen Futterbehälter 14, der einen bis etwa zur Oberseite der Käfigbatterie 1 aufragenden Höhenförderer 15 aufnimmt. Dieser besteht im wesentlichen aus einem vertikalen Förderrohr 16 mit einer Förderschnecke 17, die von einer an der Oberseite des Futterwagens 10 vorgesehenen Antriebseinrichtung mit einem Fördermotor 18 (Fig. 2) und einer Transmission 19 angetrieben wird.

An jedes der beiden Förderrohre 16 sind drei Auslauftrichter 20 angeschlossen, die jeweils in einen der drei Tröge 7 auf der betreffenden Längsseite der Käfigbatterie 1 herabragen und mit einer drehbaren Scheibe 21 versehen sind.

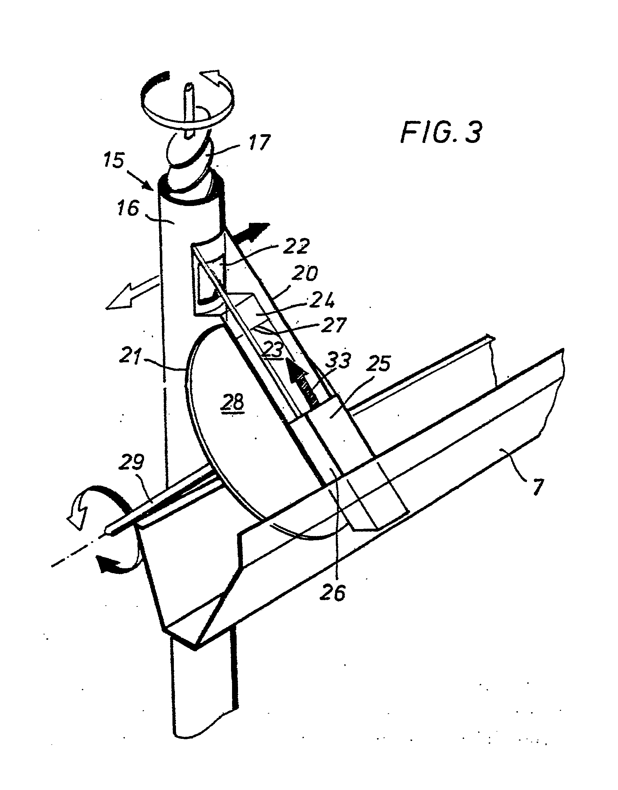

Gemäß Fig. 3 ist jeder Auslauftrichter 20 mit seinem oberen Ende an eine Abgabeöffnung 22 des Förderrohrs 16 angeschlossen. Die Förderschnecke 17 gibt durch die Abgabeöffnungen 22 dosierte Futtermengen ab, wobei überschüssiges Futter am oberen Ende des Förderrohrs wieder in den Futterbehälter 14 abgeworfen wird. Der abwärts geneigte Trichterkanal 23 weist einen im wesentlichen rechteckigen Querschnitt auf und ist dabei von einer unteren Trichterwand 24, einer oberen Trichterwand 25 und zwei seitlichen Trichterwänden 26 begrenzt. In der unteren Trichterwand 24 ist eine Wandöffnung 27 ausgebildet, die sich über die ganze Breite und im wesentlichen die gesamte Länge des Trichterkanals 23 erstreckt.

Im Bereich der Wandöffnung 27 wird der Trichterkanal 23 von der Scheibe 21 bzw. ihrer schräg nach oben weisenden Kreisfläche 28 begrenzt. Dabei weist die Scheibe 21 einen die Länge der Wandöffnung 27 etwas übersteigenden Durchmesser auf. Die Scheibe 21 ist mit ihrer durch die Scheibenwelle 29 verlaufenden Drehachse in Längsrichtung zur einen Seite des Auslauftrichters 20 hin versetzt angeordnet, ragt aber auch noch über die andere Seite des Auslauftrichters 20 vor, wie es aus Fig. 3 zu ersehen ist. Jede der insgesamt sechs Scheiben 21 ist mit ihrer Scheibenwelle 29 im betreffenden Seitenteil 12 bzw. 13 drehbar gelagert.

Der Fahrantrieb für die Räder 11 des Futterwagens 10 weist gemäß Fig. 2 einen Fahrmotor 30 und einen umlaufenden Antriebsgurt oder eine Antriebskette 31 auf. Diese treibt die Räder 11 und über Transmissionen 32 auch die Scheiben 21 an.

Wie in Fig. 2 angedeutet kann die Antriebskette 31 sowohl in der einen wie in der entgegengesetzten Richtung umlaufen, um den Futterwagen 10 in der einen oder in der entgegengesetzten Richtung auf den Laufschienen 9 zu verfahren, wie es jeweils durch einen vollflächigen Pfeil und einen nur mit einer Umrißlinie gezeichneten Pfeil angedeutet ist. Dementsprechend drehen sich auch die Scheiben 21 entweder in der einen oder in der anderen Richtung um ihre Achse, wie es gleichfalls auch in Fig. 3 dargestellt ist. Die mit einem eigenen Antrieb versehene Förderschnecke 17 wird natürlich in beiden Fahrtrichtungen gleichsinnig angetrieben. Durch die Drehung der Scheibe 21 wird deren Kreisfläche im Bereich der Wandöffnung 27 entsprechend dem Pfeil 33 im wesentlichen aufwärts - bei entgegengesetzter Fahrtrichtung abwärts - bewegt. Dadurch wird wirksam vermieden, daß durch den Trichterkanal 23 über die Kreisfläche 28 der Scheibe 21 herabrutschendes Futter sich im Auslauftrichter 20 festsetzt. Somit wird das Futter kontinuierlich am unteren Ende des Auslauftrichters 20 abgegeben. Dementsprechend werden alle sechs Tröge vom Futterwagen 10 über ihre Länge gleichmäßig gefüllt, so daß das Futter gleichmäßig verteilt wird.

Zusammengefaßt läßt sich die Erfindung wie folgt darstellen: Der Futterwagen ist mit wenigstens einem Höhenförderer und mit einem an diesen angeschlossenen abwärts geneigten Auslauftrichter versehen, dessen Trichterkanal eine Wandöffnung aufweist, die durch eine Kreisfläche einer Scheibe geschlossen gehalten wird, die mit einem Drehantrieb versehen ist. Durch die Drehbewegung der Scheibe wird das Futter an einer Brückenbildung im Auslauftrichter gehindert und dementsprechend in einem kontinuierlichen gleichmäßigen Strom abgegeben.

**Patentansprüche**

1. Futterwagen für eine mehretagige Käfigbatterie (1), mit einem Futterbehälter (14), einem Höhenförderer (15) für das Futter, der den verschiedenen Käfigetagen (3, 4, 5) zugeordnete Abgabeöffnungen (22) aufweist, und mit verstellbaren Auslauftrichtern (20), die sich jeweils von einer Abgabeöffnung (22) geneigt abwärts erstrecken und im Betrieb bis in den zugehörigen Etagentrog (7) der Käfigbatterie (1) herabragen, dadurch gekennzeichnet, daß wenigstens ein Teil der geneigten Wand (24) eines jeden Auslauftrichters (20), auf der das Futter herabrutscht, offen gestaltet ist und in dieser Wandöffnung eine entsprechend geneigte, drehbar gelagerte und mit einer Antriebseinrichtung (32) versehene Scheibe angeordnet ist, die in diesem Bereich die Wand des Auslauftrichters (20) bildet.

2. Futterwagen nach Anspruch 1, dadurch **gekennzeichnet,** daß die Scheiben (21) im wesentlichen über die gesamte Länge des zugehörigen Auslauftrichters (20) erstrecken.

3. Futterwagen nach Anspruch 1 oder 2, dadurch **gekennzeichnet,** daß die Scheiben (21) nach beiden Seiten über den zugehörigen Auslauftrichter (20) vorstehen.

4. Futterwagen nach einem der Ansprüche 1 bis 3, dadurch **gekennzeichnet,** daß die Drehachse (29) jeder Scheibe (21) seitlich vom zugehörigen Auslauftrichter (20) verläuft.

5. Futterwagen nach einem der Ansprüche 1 bis 4, dadurch **gekennzeichnet,** daß die Antriebseinrichtungen (32) der Scheiben (21) vom Fahrantrieb (30, 31) des Futterwagens (10) abgeleitet sind.

**Claims**

1. A feed carriage for a multi-storey battery cage (1), having a feed container (14), a vertical conveyer (15) which is for the feed and has discharge openings (22) associated with the various cage-storeys (3, 4, 5), and having adjustable delivery funnels (20) which each extend downwards at an incline from a discharge opening (22) and during operation project down into their respective storey-trough (7) of the batter-cage (1), characterized in that at least one part of the inclined wall (24) of each delivery funnel (20), down which the feed slides, is open in design and a disc is arranged in this wall opening, which disc is correspondingly inclined, is rotatably mounted, is provided with a drive device (32) and in this area forms the wall of the delivery funnel (20).

2. A feed carriage in accordance with Claim 1, characterized in that the discs (21) extend substantially over the whole length of their respective delivery funnels (20).

3. A feed carriage in accordance with Claim 1 or 2, characterized in that the discs (21) project to both sides beyond their respective delivery funnels (20).

4. A feed carriage in accordance with one of Claims 1 to 3, characterized in that the axis of rotation (29) of each disc (21) runs at the side of the delivery funnel (20) of the latter.

5. A feed carriage in accordance wih one of Claims 1 to 4, characterized in that the drive devices (32) of the discs (21) are run off the travelling mechanism (30, 31) for the feed carriage (10).

**Revendications**

1. Chariot d'alimentation pour batterie de cages (1) en plusieurs étages, avec un réservoir de nourriture (14), un élévateur (15) à nourriture présentant des ouvertures de décharge (22) correspondant aux différents étages (3, 4, 5) de cages et des trémis réglables d'écoulement (20) inclinées vers le bas à partir des ouvertures de décharge (22) et s'étendant en service jusqu'à l'auge d'étage (7) correspondante de la batterie de cages, caractérisé en ce qu'une partie au moins de la paroi inclinée (24) de chacune des trémies d'écoulement (20) sur laquelle glisse la nourriture, est ouverte et en ce qu'un disque monté pivotant et incliné, doté d'un mécanisme d'entraînement (32) forme la paroi de la trémie d'écoulement (20) à ce niveau.

2. Chariot d'alimentation selon la revendication 1, caractérisé en ce que les disques (21) s'étendent essentiellement sur toute la longueur de la trémie d'écoulement (20) correspondante.

3. Chariot d'alimentation selon la revendication 1 ou 2, caractérisé en ce que les disques (21) dépassent des deux côtés de la trémie d'écoulement (20) correspondante.

4. Chariot d'alimentation selon l'une des revendications 1 à 3, caractérisé en ce que l'axe de rotation (29) de chacun des disques (21) passe sur le côté de la trémie d'écoulement (20) correspondante.

5. Chariot d'alimentation selon l'une des revendications 1 à 4, caractérisé en ce que les dispositifs d'entraînement (32) des disques (21) sont mus par le mécanisme de translation (30, 31) du chariot d'alimentation (10).

FIG.1

## FIG. 2

FIG. 3